# EUROPEAN PATENT SPECIFICATION

(11) **EP 4 517 626 B1**
(45) Date of publication and mention of the grant of the patent: **12.11.2025**
(21) Application number: 23796090.1
(22) Date of filing: 11.04.2023
(51) Int. Cl.: G06Q 10/30

(54) **WASTE MATERIAL MANAGEMENT SYSTEM**
ABFALLMATERIALVERWALTUNGSSYSTEM
SYSTÈME DE GESTION DE DÉCHETS

(30) Priority: 26.04.2022 JP 2022072426
(43) Date of publication of application: 05.03.2025
(73) Proprietor: DENSO CORPORATION, Kariya-city, Aichi 448-8661 (JP)
(72) Inventor: TAKEUCHI Shinsuke, Kariya- city, Aichi 4488661 (JP); NISHINO Tatsuhiko, Kariya- city, Aichi 4488661 (JP); TAKISE Shinichiro, Kariya- city, Aichi 4488661 (JP)
(74) Representative: TBK
(86) International application number: PCT/JP2023/014693
(87) International publication number: WO 2023/210346

(56) References cited:
- CN-A- 105 260 836
- CN-A- 105 260 836
- JP-A- 2010 191 832
- JP-A- 2010 191 832
- JP-A- 2019 090 699
- US-A1- 2021 216 978
- US-A1- 2021 216 978

## Description

### CROSS REFERENCE TO RELATED APPLICATION

This application is based on Japanese Patent Application No. 2022-072426 filed on April 26, 2022.

### TECHNICAL FIELD

The present disclosure relates to a scrap material management system.

### BACKGROUND ART

A management device capable of monitoring the amount of greenhouse gas emissions involved in the manufacturing of each product has been proposed, for example, in Patent Literature 1.

### PRIOR ART LITERATURE

### PATENT LITERATURE

Patent Literature 1: JP 2010-191832 A

### SUMMARY OF INVENTION

In management of the manufacturing of a heat exchanger as a product, it is necessary to strictly monitor the material composition of scrap generated from parts manufacturing of incoming materials and defective scrap from the heat exchanger in the heat exchanger manufacturing plant. Additionally, it is necessary to monitor the carbon footprint based on the emissions of greenhouse gases, including carbon dioxide.

However, in a brazing process in the manufacturing of the heat exchanger, a change in material composition occurs due to the heating condition of the brazing. For this reason, it is difficult to monitor the composition of scrap material generated after the brazing process. Therefore, even if attempts are made to recycle the scrap material generated after the brazing process, it is limited to cascade recycling, in which it is used for lower-grade die-cast materials, rather than horizontal recycling, in which it is recycled again into heat exchanger materials with strict component requirements.

In view of the above, an object of the present disclosure is to provide a scrap material management system that can monitor the material composition and carbon footprint of all scrap materials generated in the manufacture of a heat exchanger.

According to an aspect of the present disclosure, a scrap material management system includes a management unit that acquires and manages material acceptance data including information on the type of materials required for manufacturing a heat exchanger, the composition of the materials, the weight of the materials, and the amount of greenhouse gas emissions required to prepare the materials, utility data including information on the power consumption and amount of gas consumed when manufacturing the heat exchanger, and weight data on the state of the finished heat exchanger, the state of the heat exchanger parts, and the state of scrap materials generated when manufacturing the heat exchanger.

The scrap material management system includes a prediction unit that predicts a change in the material composition of post-brazing scrap material generated after the brazing process among the scrap materials, using brazing condition data and material acceptance data used in the brazing process of the heat exchanger.

The management unit monitors the material composition and carbon footprint of each scrap material in real time based on the amount of scrap material, including part scrap generated in the parts manufacturing process in which heat exchanger parts are manufactured from materials, post-assembly scrap generated in the assembly process in which parts are assembled after the parts manufacturing process, and post-brazing scrap, as well as the material composition predicted by the prediction unit.

Accordingly, the prediction unit can predict the material composition of the post-brazing scrap material after the material composition has changed in the brazing process. Therefore, in the manufacturing of heat exchangers, the material composition and carbon footprint of all scrap materials, including post-brazing scrap materials after the material composition has changed, can be understood. Furthermore, since the process of determining the material composition of the post-brazing scrap material is no longer necessary, it is possible to reduce not only the energy consumption required for the process but also the amount of CO₂ emission.

### BRIEF DESCRIPTION OF DRAWINGS

The above and other objects, features and advantages of the present disclosure will be more clearly understood from the following detailed description with reference to the accompanying drawings. In the accompanying drawings:
FIG. 1 is a drawing illustrating a scrap material management system according to an embodiment; and
FIG. 2 is a drawing for explaining scrap materials generated in respective processes of a heat exchanger.

### EMBODIMENT FOR CARRYING OUT INVENTION

The following describes an embodiment of the present disclosure with reference to the drawings. The scrap material management system according to the present embodiment manages materials, products, scrap materials, and utilities in a heat exchanger manufacturing plant that produces a heat exchanger as a product.

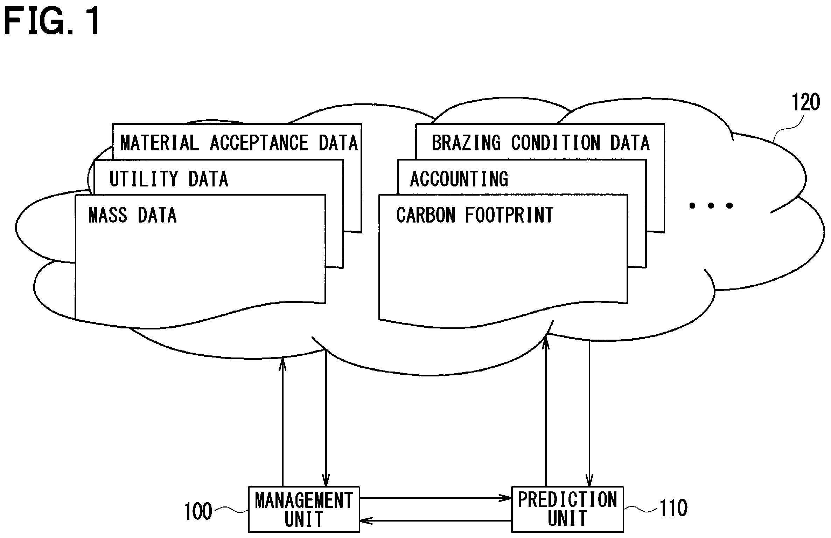

As shown in FIG. 1, the scrap material management system includes a management unit 100 and a prediction unit 110. The management unit 100 and the prediction unit 110 are constructed as, for example, an electronic computer. The management unit 100 and the prediction unit 110 manage scrap materials and carbon footprints generated during the manufacture of a heat exchanger by executing a pre-designed program.

The management unit 100 and the prediction unit 110 are installed in a heat exchanger manufacturing factory. The management unit 100 and the prediction unit 110 are connected to, for example, an ICT (Information and Communication Technology) environment, thereby making it possible for them to access a cloud 120. This makes it possible to monitor the data remotely. In other words, global production and scrap can be monitored from a remote location.

In addition, electronic device terminals (not shown) installed in the heat exchanger manufacturing factory are also able to access the cloud 120. This allows the management unit 100, the prediction unit 110, and each electronic device terminal to transmit and receive data related to the manufacture of the heat exchanger at any time via the cloud 120.

The management unit 100, the prediction unit 110, and each electronic device terminal access the cloud 120 using a mobile communication system such as 4G or 5G. This makes it possible to link each individual heat exchanger through high-speed communication, even with the massive amount of data generated by high-speed processing.

The cloud 120 is a cloud computing that stores all data related to, for example, the manufacture of the heat exchanger. The data relating to production includes, for example, production data, carbon footprint data, and accounting data. Accounting data includes costs such as cost of goods and processing costs during manufacturing.

The management unit 100 centrally manages the above-mentioned manufacturing data, accounting data, and carbon footprint data. That is, the management unit 100 collects and manages several pieces of information in the cloud 120, thereby maintaining a state in which each piece of information can be efficiently utilized.

The manufacturing data includes all data such as the cost of producing heat exchangers, the types of accepted materials, the weight of materials generated at each process, and the energy input. Manufacturing data includes, for example, data related to manufacturing such as material acceptance data, utility data, weight data, and brazing condition data.

The material acceptance data includes information on the type of material required to manufacture the heat exchanger, the composition of the material, the weight of the material, and the greenhouse gas emissions required to prepare the material. The material acceptance data is acquired, for example, by reading an identification mark or the like with a reading device.

The utility data includes information on the amount of power consumed and gas consumed during the manufacture of the heat exchanger, and information on the amount of greenhouse gas emissions generated in the heat exchanger manufacturing factory. The utility data is acquired at any time using measuring instruments such as a watt-hour meter, a gas flow meter, and a thermometer.

The weight data includes information on the weight in a state of the finished heat exchanger, a state of the heat exchanger parts, and a state of scrap materials generated during the manufacture of the heat exchanger. The weight data is acquired at any time using measuring instruments such as a dimension measuring instrument and a weight scale.

The brazing condition data includes data related to brazing, such as heat input temperature, wind speed, product size, and furnace atmosphere. The brazing condition data is uploaded to the cloud 120 in advance.

The management unit 100 acquires and manages material acceptance data, utility data, and weight data. These data are updated as needed at each process in the manufacture of the heat exchanger. The management unit 100 records and manages all manufacturing data of the heat exchanger.

On the other hand, the management unit 100 discloses publicly available information in response to an external request. For example, when data transparency is requested from the outside, the management unit 100 provides publicly available data to the outside.

The management unit 100 manages data using blockchain technology. That is, the management unit 100 directly connects terminals on an information communication network to each other, and processes and records transaction records in a distributed manner using encryption technology. In this way, the management unit 100 prevents data tampering and data related to manufacturing from leaking to the outside. Furthermore, the management unit 100 prevents the external leakage of manufacturing know-how on the cloud 120.

The prediction unit 110 predicts a change in the material composition of post-brazing scrap material generated after a brazing process in the manufacturing process of a heat exchanger. The material composition of the scrap materials recovered in a series of manufacturing processes can be calculated from the material composition of each scrap material and the total weight of scrap materials. For example, if the weight of the first scrap material is 100 kilograms and it contains 10% zinc, and the weight of the second scrap material is 100 kilograms and it contains 0% zinc, the total weight of the scrap materials is 200 kilograms, and it can be calculated that they contain 5% zinc.

However, in the brazing process for manufacturing the heat exchanger, the material composition changes depending on the brazing heating condition. For this reason, it is necessary to predict the material composition of the scrap material recovered after the brazing process. Therefore, the prediction unit 110 predicts the change in material composition for each target heat exchanger, for example, by using reference material composition data measured in advance. The material composition data is managed in the cloud 120 and updated as necessary. The above is the overall configuration of the scrap material management system.

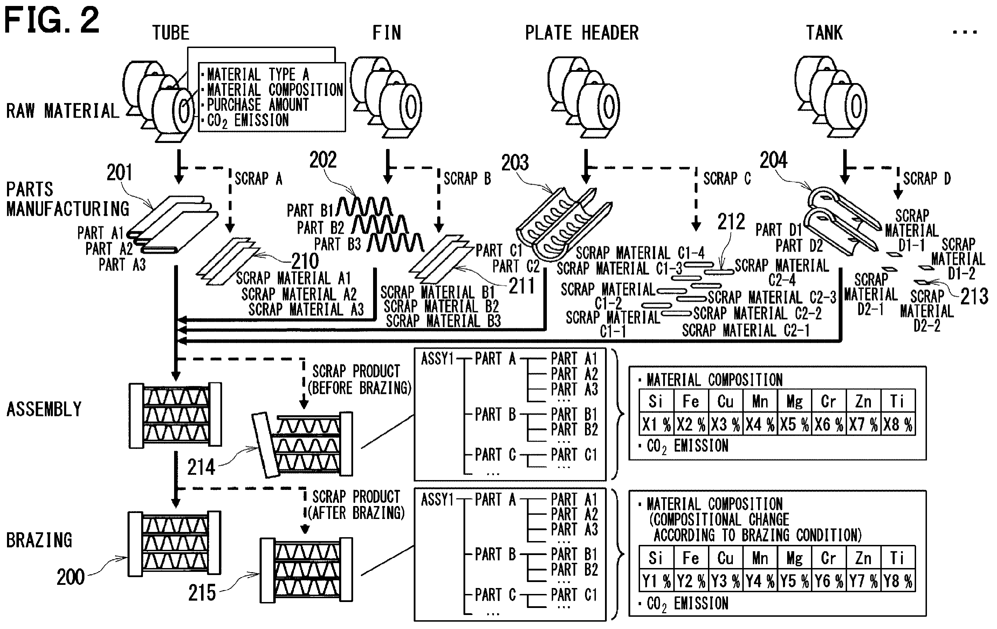

The following describes scrap materials in the manufacture of the heat exchanger with reference to FIG. 2. As shown in FIG. 2, a heat exchanger 200 is completed through roughly a material acceptance process, a parts manufacturing process, an assembly process, and a brazing process.

In the material acceptance process, materials for manufacturing various parts such as tubes, fins, plate heads, and tanks are received from suppliers. At this time, the heat exchanger manufacturing plant accepts materials in a state where each piece of information, such as the type of material, material composition, purchase amount, and amount of CO₂ emissions required to manufacture the material, is linked to each lot of the materials. Material information is stored in cloud 120 when the material is received.

Next, in the parts manufacturing process, each part of the heat exchanger 200 is manufactured from the material. The management unit 100 manages the regular parts used in the products and the amount of scrap material generated, in conjunction with the data from the material acceptance process.

For example, if a tube 201 that constitutes the heat exchanger 200 is designated as part A, multiple parts A, such as parts A1, A2, A3, etc., are manufactured from the material for each heat exchanger 200. Scrap A including scrap materials A1, A2, A3, etc., generated during the manufacturing of the tube 201 is collected as a component scrap material 210.

If a fin 202 is designated as part B, multiple parts B, such as parts B1, B2, B3, etc., are manufactured from the material for each heat exchanger 200. Scrap B including scrap materials B1, B2, B3, etc., generated during the manufacturing of fins 202, are collected as a component scrap material 211.

If a plate header 203 is designated as part C, multiple parts C, such as parts C1, C2, etc., are manufactured from the material for each heat exchanger 200. Scrap materials C1-1, C1-2, C1-3, C1-4, C2-1, C2-2, C2-3, C2-4, etc., generated during the manufacturing of plate headers 203, are collected as component scrap material 212.

If a tank 204 is designated as part D, multiple parts D, such as parts D1, D2, etc., are manufactured from the material for each heat exchanger 200. Scrap materials D1-1, D1-2, D2-1, D2-2, etc., generated during the manufacturing of tanks 204, are collected a parts scrap material 213.

Similarly, for other parts, the management unit 100 collects scrap material as needed. Additionally, the management unit 100 periodically manages the weight of finished products, including the parts 201 to 204, as well as the weight of the component scrap materials 211 to 213 generated during the parts manufacturing process, in conjunction with the data from the material acceptance process.

Subsequently, in the assembly process, the parts 201 to 204 manufactured in the parts manufacturing process are assembled. At this time, due to assembly defects or other issues, post-assembly scrap material 214 is generated as a scrap product (ASSY1) The management unit 100 manages the weight of the properly assembled parts and the weight of the post-assembly scrap material 214.

At this time, the composition of the post-assembly scrap material 214 is determined by the material composition and constituent weight of the parts 201 to 204. In other words, the post-assembly scrap material 214 includes the parts 201 to 204, as well as parts that make up these parts 201 to 204. Therefore, the material composition of the post-assembly scrap material 214 is determined as follows, for example, with respect to the weight of the post-assembly scrap material 214: Si: X1%, Fe: X2%, Cu: X3%, Mn: X4%, Mg: X5%, Cr: X6%, Zn: X7%, and Ti: X8%. Also, the amount of CO₂ emissions relative to the weight of the post-assembly scrap material 214 is derived.

Next, in the brazing process, the properly assembled product obtained in the assembly process is brazed using the brazing condition data. After the brazing process, due to a brazing defect or the like, post-brazing scrap material 215 is generated as a scrap product (ASSY1). The management unit 100 manages the weight of the properly brazed product and the weight of the post-brazing scrap material 215.

Here, the weight of the post-brazing scrap material 215 is approximately the same as that of the post-assembly scrap material 214, but the material composition changes due to heating for brazing. Therefore, the material composition of the post-brazing scrap material 215 is not determined by the material composition and component weight of the components 201 to 204. Therefore, the prediction unit 110 predicts the material composition of the post-brazing scrap material 215.

The prediction unit 110 predicts a change in the material composition of the post-brazing scrap material 215 generated after the brazing process using the brazing condition data and the material acceptance data. The prediction unit 110 predicts the amount of change in at least one of Si, Fe, Cu, Mn, Mg, Cr, Zn, and Ti contained in the post-brazing scrap material 215.

This allows for the management of both the scrap material data linked to the material data and the composition predicted from the brazing conditions, making it possible to predict the composition of the recovered scrap material during melting in advance. The material composition of the post-brazing scrap material 215 is predicted to be, for example, Y1% Si, Y2% Fe, Y3% Cu, Y4% Mn, Y5% Mg, Y6% Cr, Y7% Zn, and Y8% Ti by weight of the post-brazing scrap material 215. In addition, the CO₂ emissions per weight of the post-brazing scrap material 215 are also derived. In particular, it is possible to accurately predict the concentrations of Zn and Mg, which are prone to change under brazing conditions.

Since the prediction unit 110 can predict changes in material composition, it is not necessary to melt the recovered post-brazing scrap material 215 and measure its material composition in order to monitor it. This also eliminates the labor required for such a process. In addition, because it is possible to accurately predict the mixing ratio of the post-brazing scrap material 215 to achieve the desired material composition, the recyclability of the post-brazing scrap material 215 is improved. Furthermore, by eliminating the need to melt the post-brazing scrap material 215 to monitor its material composition, energy consumption can be reduced, and consequently, CO₂ emissions can be decreased.

The management unit 100 monitors the material composition and carbon footprint of each scrap material 210 to 215 in real-time, based on the amount of each scrap material 210 to 215 generated in each process and the material composition predicted by the prediction unit 110. As a result, the material composition of the scrap generated during the manufacturing of the heat exchanger 200 is obtained as the sum of the material compositions of all scrap materials, the post-assembly scrap material 214, and the post-brazing scrap material 215. It should be noted that the management unit 100 may also monitor the material composition and carbon footprint of each scrap material 210 to 215 for each process.

As explained above, by managing everything from purchased materials to products, the amount of scrap, and the prediction of composition changes due to processing and brazing conditions through ICT management, it becomes possible to accurately predict the composition and carbon footprint of the scrap in real-time.

Specifically, in this embodiment, the prediction unit 110 predicts the material composition of the post-brazing scrap material 215 after the material composition has changed during the brazing process. Therefore, it is possible to monitor in real-time the material composition and carbon footprint of all scrap materials 210 to 215, including the post-brazing scrap material 215 after the material composition has changed.

Additionally, the process for determining the material composition of the post-brazing scrap material 215 becomes unnecessary. In other words, there is no need to melt and solidify the metal to form an ingot and inspect the composition of the ingot. Therefore, it is possible to reduce the energy consumption required to determine the material composition of the post-brazing scrap material 215, as well as the CO₂ emissions associated with that energy consumption.

Furthermore, the scrap management system makes it possible to manage the carbon footprint of materials and the carbon footprint of the manufacturing process. Additionally, it is possible to use the system to explore operations that minimize the carbon footprint, and to implement self-process control based on material data and prior process data to predict and reduce the post-brazing scrap material 215. If the amount of scrap materials 210 to 215 increases, the CO₂ emissions associated with manufacturing the product will also increase. However, if the amount of scrap materials 210 to 215 can be reduced, it will lead to a reduction in CO₂ emissions as well.

As a modified example, the management unit 100 may perform big data analysis or AI analysis on the data in the cloud 120. This enables the management unit 100 to, for example, predict the material composition of each scrap material 210 to 215 based on weather conditions and operate the heat exchanger manufacturing plant in such a way that minimizes the costs of each scrap material 210 to 215. In addition, it can be utilized for brazing control such as input energy/sacrificial layer formation, yield improvement processing conditions, and optimal blending ratios for horizontal recycling of return scraps.

The present disclosure is not limited to the embodiments described above, and various modifications can be made as follows within a range not departing from the scope defined in the appended claims.

For example, the management unit 100 and the prediction unit 110 may be located in the cloud 120. In this case, the user can operate the management unit 100 on the cloud 120 from each electronic device terminal in the heat exchanger manufacturing plant via a browser or similar interface.

## Claims

1. A scrap material management system comprising:
a management unit (100) configured to acquire and manage material acceptance data, utility data, and weight data,
the material acceptance data including information on
a type of a material required for manufacturing of a heat exchanger (200),
a composition of the material,
a weight of the material, and
a greenhouse gas emission required for preparation of the material,
the utility data including information on power consumption and gas consumption during the manufacturing of the heat exchanger,
the weight data including information on
a weight in a completed state of the heat exchanger,
a weight in a state of parts of the heat exchanger, and
a weight in a state of scrap materials generated during the manufacturing of the heat exchanger; and
a prediction unit (110) configured to predict a change in a material composition of a post-brazing scrap material (215) being included in the scrap materials and generated after a brazing process for the heat exchanger, based on brazing condition data and the material acceptance data used in the brazing process, wherein
the management unit is configured to monitor a material composition and carbon footprint of each of the scrap materials in real time, based on an amount of the scrap materials and the material composition predicted by the prediction unit, and
the scrap materials include:
parts scrap materials (210-213) that are generated in a parts manufacturing process for manufacturing parts (201-204) of the heat exchanger from the material;
a post-assembly scrap material (214) that is generated in an assembly process for assembling the parts after the parts manufacturing process, and
the post-brazing scrap material.

2. The scrap material management system according to Claim 1, wherein the prediction unit is configured to predict a change in amount of at least one of Si, Fe, Cu, Mn, Mg, Cr, Zn, and Ti included in the post-brazing scrap material.

3. The scrap material management system according to Claim 1 or 2, wherein
the prediction unit is configured to predict the material composition of the post-brazing scrap material based on the brazing condition data including a heat input temperature, a wind speed, a product dimension, and furnace atmosphere.

4. The scrap material management system according to any one of Claims 1 to 3, wherein
the management unit is configured to record and manage all manufacturing data of the heat exchanger and disclose publicly available information in response to an external request.

5. The scrap material management system according to any one of Claims 1 to 4, wherein
the management unit is configured to prevent data tampering and external leakage of data related to the manufacturing by using blockchain technology.

6. The scrap material management system according to any one of Claims 1 to 5, wherein
the management unit is configured to centrally manage manufacturing data of the heat exchanger, accounting data, and the carbon footprint.

## Patentansprüche

1. Abfallmaterial-Managementsystem mit:
einer Verwaltungseinheit (100), die eingerichtet ist, um Materialakzeptanzdaten, Verbrauchsdaten und Gewichtsdaten zu erfassen und zu verwalten,
wobei die Materialakzeptanzdaten Informationen über Folgendes umfassen:
eine Art eines zur Herstellung eines Wärmetauschers (200) erforderlichen Materials,
eine Zusammensetzung des Materials,
ein Gewicht des Materials und
zur Aufbereitung des Materials erforderliche Treibhausgasemissionen,
wobei die Verbrauchsdaten Informationen über Energieverbrauch und Gasverbrauch während der Herstellung des Wärmetauschers umfassen,
wobei die Gewichtsdaten Informationen über Folgendes umfassen:
ein Gewicht des Wärmetauschers in fertigem Zustand,
ein Gewicht des Wärmetauschers in einem Teile-Zustand und
ein Gewicht von bei der Herstellung des Wärmetauschers anfallenden Abfallmaterialien; und
einer Vorhersageeinheit (110), die eingerichtet ist, um eine Änderung in einer Materialzusammensetzung eines nach dem Löten anfallenden Abfallmaterials (215), das in den Abfallmaterialien enthalten ist und nach einem Lötvorgang für den Wärmetauscher anfällt, auf der Grundlage von Lötbedingungsdaten und den im Lötvorgang verwendeten Materialakzeptanzdaten vorherzusagen, wobei
die Verwaltungseinheit eingerichtet ist, um eine Materialzusammensetzung und einen CO₂-Fußabdruck jedes der Abfallmaterialien in Echtzeit zu überwachen, auf der Grundlage einer Menge der Abfallmaterialien und der von der Vorhersageeinheit vorhergesagten Materialzusammensetzung, und
die Abfallmaterialien Folgendes umfassen:
Teileabfallmaterialien (210-213), die in einem Teileherstellungsvorgang zur Herstellung von Teilen (201-204) des Wärmetauschers aus dem Material anfallen;
ein Nachmontage-Abfallmaterial (214), das in einem Montagevorgang zur Montage der Teile nach dem Teileherstellungsvorgang anfällt, und
das nach dem Löten anfallende Abfallmaterial.

2. Abfallmaterial-Managementsystem gemäß Anspruch 1, wobei
die Vorhersageeinheit eingerichtet ist, um eine Mengenänderung von mindestens einem der Elemente Si, Fe, Cu, Mn, Mg, Cr, Zn und Ti, die im nach dem Löten anfallenden Abfallmaterial enthalten sind, vorherzusagen.

3. Abfallmaterial-Managementsystem gemäß Anspruch 1 oder 2, wobei
die Vorhersageeinheit eingerichtet ist, um die Materialzusammensetzung des nach dem Löten anfallenden Abfallmaterials auf der Grundlage der Lötbedingungs-Daten, einschließlich einer Wärmezufuhrtemperatur, einer Windgeschwindigkeit, einer Produktabmessung und einer Ofenatmosphäre, vorherzusagen.

4. Abfallmaterial-Managementsystem gemäß einem der Ansprüche 1 bis 3, wobei
die Managementeinheit eingerichtet ist, um alle Herstellungsdaten des Wärmetauschers aufzuzeichnen und zu verwalten und öffentlich zugängliche Informationen auf eine externe Anfrage hin offenzulegen.

5. Abfallmaterial-Managementsystem nach einem der Ansprüche 1 bis 4, wobei
die Managementeinheit eingerichtet ist, um Datenmanipulationen und externes Durchsickern von Daten in Zusammenhang mit der Herstellung durch den Einsatz von Blockchain-Technologie zu verhindern.

6. Abfallmaterial-Managementsystem nach einem der Ansprüche 1 bis 5, wobei
die Managementeinheit eingerichtet ist, um Herstellungsdaten des Wärmetauschers, Buchhaltungsdaten und den CO₂-Fußabdruck zentral zu verwalten.

## Revendications

1. Système de gestion des matériaux de rebut comprenant :
une unité de gestion (100) configurée pour acquérir et gérer des données d'acceptation des matériaux, des données d'utilité et des données de poids,
les données d'acceptation des matériaux comportant des informations sur
un type de matériau nécessaire à la fabrication d'un échangeur de chaleur (200),
une composition du matériau,
un poids du matériau et
des émissions de gaz à effet de serre nécessaires à la préparation du matériau,
les données d'utilité comportant des informations sur la consommation d'énergie et de gaz pendant la fabrication de l'échangeur de chaleur,
les données de poids comportant des informations sur
un poids de l'échangeur de chaleur en état fini,
un poids de l'échangeur de chaleur en état de pièces, et
un poids à l'état de matériaux de rebut générés pendant la fabrication de l'échangeur de chaleur ; et
une unité de prédiction (110) configurée pour prédire un changement dans une composition matérielle d'un matériau de rebut post-brasage (215) inclus dans les matériaux de rebut et généré après un procédé de brasage pour l'échangeur de chaleur, sur la base de données concernant des conditions de brasage et les données d'acceptation des matériaux utilisées dans le procédé de brasage, dans lequel
l'unité de gestion est configurée pour surveiller en temps réel une composition matérielle et une empreinte carbone de chacun des matériaux de rebut, sur la base d'une quantité des matériaux de rebut et de la composition matérielle prédite par l'unité de prédiction, et
les matériaux de rebut comportent :
des matériaux de rebut de pièces (210-213) générés lors d'un procédé de fabrication de pièces pour fabriquer des pièces (201-204) de l'échangeur de chaleur à partir du matériau ;
un matériau de rebut post-assemblage (214) généré lors d'un procédé d'assemblage pour assembler les pièces après le procédé de fabrication de pièces, et
les matériaux de rebut post-brasage.

2. Système de gestion de matériaux de rebut selon la revendication 1, dans lequel
l'unité de prédiction est configurée pour prédire une variation de la quantité d'au moins l'un des éléments Si, Fe, Cu, Mn, Mg, Cr, Zn et Ti contenus dans les matériaux de rebut post-brasage.

3. Système de gestion de matériaux de rebut selon la revendication 1 ou 2, dans lequel
l'unité de prédiction est configurée pour prédire la composition matérielle des matériaux de rebut post-brasage sur la base des données de conditions de brasage, notamment une température d'entrée de chaleur, une vitesse du vent, une dimension de produit et une atmosphère de four.

4. Système de gestion de matériaux de rebut selon l'une quelconque des revendications 1 à 3, dans lequel
l'unité de gestion est configurée pour enregistrer et gérer toutes les données de fabrication de l'échangeur de chaleur et divulguer des informations accessibles au public en réponse à une demande externe.

5. Système de gestion de matériaux de rebut selon l'une quelconque des revendications 1 à 4, dans lequel
l'unité de gestion est configurée pour empêcher une falsification de données et une fuite externe de données liées à la fabrication en utilisant une technologie blockchain.

6. Système de gestion de matériaux de rebut selon l'une quelconque des revendications 1 à 5, dans lequel
l'unité de gestion est configurée pour gérer de manière centralisée des données de fabrication de l'échangeur de chaleur, des données comptables et l'empreinte carbone.
